# EUROPÄISCHE PATENTSCHRIFT

(11) **EP 2 480 712 B1**
(45) Veröffentlichungstag und Bekanntmachung des Hinweises auf die Patenterteilung: **17.04.2013**
(21) Anmeldenummer: 10763342.2
(22) Anmeldetag: 27.09.2010
(51) Int. Cl.: D06F 57/00, F16B 17/00

(54) **WÄSCHETROCKNUNGSGESTELL**
LAUNDRY DRYING RACK
SÉCHOIR À LINGE

(30) Priorität: 26.09.2009 DE 102009043194
(43) Veröffentlichungstag der Anmeldung: 01.08.2012
(73) Patentinhaber: Leifheit AG, 56377 Nassau (DE)
(72) Erfinder: PAKUSA, Norbert, 56377 Schweighausen (DE)
(74) Vertreter: Bungartz, Klaus Peter
(86) Internationale Anmeldenummer: PCT/EP2010/064290
(87) Internationale Veröffentlichungsnummer: WO 2011/036298

(56) Entgegenhaltungen:
- EP-A1- 0 067 264
- FR-A1- 2 726 335

## Beschreibung

### Technisches Gebiet

Die Erfindung betrifft ein Wäschetrocknungsgestell mit Aufhängmitteln zum trocknenden Aufhängen von Wäschestücken und einem die Aufhängmittel tragenden Tragegestell, das zumindest zwei, miteinander verbundene Tragrohre aufweist, die über ein Steckverbindungselement miteinander verbunden sind, wobei das Steckverbindungselement zumindest einen Einschub für ein Endstück eines der Tragrohre aufweist, in dem das Endstück gehalten ist.

### Stand der Technik

Ein Wäschetrocknungsgestell dieser Art ist aus der FR 2726335 als Standgestellt bekannt. Ferner sind ähnliche Wäschetrocknungsgestelle als Standgestell oder als wandhängendes Gestell allgemein bekannt. Diese sind üblicherweise aus einem Rohrmaterial hergestellt, wobei die Rohre oft aus Metall bestehen. Die Rohre werden im Herstellungsprozess aufwändig gebogen und durch Verschrauben oder Verschweißen miteinander oder mit einem Trocknungsgitter verbunden. Dies hat den Nachteil, dass das Biegen und Verbinden sehr aufwändig ist und zu unschönen Verbindungsstellen oder einem Abplatzen einer eventuellen Beschichtung führen kann.

Außerdem sind die bekannten Wäschetrocknungsgestelle nicht verwindungssteif, wenn das gebogene Rohrmaterial und die Schweiß- und Schraubverbindungen nicht besonders hohen Qualitätsanforderungen genügen. Sofern Steckverbindungen verwendet werden, besteht die Risiko ebenfalls in erhöhtem Masse, da diese keine Sicherung gegen ein Verwinden der Tragstäbe bieten.

### Darstellung der Erfindung

Es ist daher Aufgabe der vorliegenden Erfindung, einen Wäschetrockner in Form eines Wäschetrocknungsgestells zu schaffen, dass über Steckverbindungselemente zusammengesetzt ist, wobei die oben beschriebenen Nachteile minimiert sein sollen. Insbesondere soll das neue Wäschetrocknungsgestell ein schnelles und kostengünstiges Aufstecken der Tragrohre erlauben, wobei eine sichere, insbesondere verdrehsichere Verbindung geschaffen wird.

Diese Aufgabe wird durch ein Wäschetrocknungsgestell nach Anspruch 1 gelöst, das insbesondere dadurch gekennzeichnet ist, dass in dem Steckverbindungselement zumindest ein Deformationselement angeordnet ist, das das Tragrohr beim Aufsteckvorgang verformt.

Durch die Deformation des Endstücks des Tragrohrs kann nun auf eine vorherige Deformation oder eine sonstige Befestigung des Tragrohres verzichtet werden. Es muss lediglich das Endstück des Tragrohres bei der erstmaligen Montage in den Einschub eingeschoben werden, wobei durch dieses Einschieben eine zwangsweise Deformation auftritt. Hierzu kann das Tragrohr mit einer geeigneten Wandstärke versehen sein oder im Bereich des zu deformierenden Endstücks in der Wandstärke reduziert sein. Besonders vorteilhaft ist ferner, dass auf zusätzliche Bauteile zur Befestigung, insbesondere auf Schrauben, Nieten oder Nut-/Federverbindungen nun verzichtet werden kann.

Bei einer besonders vorteilhaften Ausführungsform des erfindungsgemäßen Steckverbindungselements ist vorgesehen, dass das Deformationselement zumindest eine Rippe aufweist und/oder als Rippe ausgebildet ist. Insbesondere kann vorgesehen sein, dass das Deformationselement eine Anlaufschräge aufweist. Dies hat den Vorteil, dass die zum Aufstecken erforderliche Kraft geringer ist als bei einer Ausführungsform ohne Anlaufschräge.

So kann ein Beispiel eines Deformationselementes eine mittige Zentrierung aufweisen, die zum Beispiel von einer halbkugelförmigen Erhebung oder einem Stern bzw. Kreuz gebildet sein kann. Diese Zentrierung greift beim Einführen des Tragrohres in das offene Ende des Endbereichs ein und zentriert es, während die übrigen Teile des Deformationselements die Deformation der Wandung des Tragrohres gegen den Gegendruck der Zentrierung bewirken.

Hier können zum Beispiel von außen ein oder mehrere Druckelemente vorgesehen sein, dass die Wandung des Tragrohres nach innen biegt. Diese Druckelemente können in einem einfachen Fall von nach innen hervorspringenden Stegen bzw. Rippen gebildet sein, die so angeordnet und geformt sind, das sie mit der Zentrierung zusammenwirken.

Im Falle einer kreuz- oder sternförmigen Zentrierung sind zum Beispiel die Rippen so angeordnet, dass sie zwischen den nach außen hervorstehenden Bereichen des Kreuzes bzw. Sterns angeordnet sind, so dass sie die Wandung des Tragrohrs in die Einengungen der Zentrierung drücken, so dass der Endbereich des Tragrohres an die Form der Zentrierung angepasst wird und im Außenquerschnitt ebenfalls stern- oder kreuzförmig wird.

Insbesondere kann also vorgesehen sein, dass das Steckverbindungselement mehrere Deformationselemente aufweist, die bevorzugt derart angeordnet sind, dass dem Rohrende eine ganz bestimmte Form auf- beziehungsweise eingeprägt wird.

Besonders vorteilhaft ist eine Ausführungsform, bei der die Deformationselemente derart angeordnet sind, dass benachbarte Deformationselemente abwechselnd auf die Außenwandung des einzuschiebenden Tragrohrs und auf die Innenwandung des einzuschiebenden Tragrohrs einwirken. Im Querschnitt wird dem Tragrohr dadurch eine Schlangenlinienstruktur eingeprägt, die eine besondere Sicherung wegen Verdrehen gewährleistet.

Bei einer besonderen Ausführungsform ist das Deformationselement kreuzförmig ausgebildet. Es kann alternativ oder zusätzlich auch vorgesehen sein, dass mehrere Deformationselemente kreuzförmig zueinander angeordnet sind.

Bei einer besonderen Ausführungsform weist das Steckverbindungselement, zumindest einen Einschub für ein Tragrohr auf. Hierbei kann insbesondere vorgesehen sein, dass ein Deformationselement an einer Innenwand des Einschubs angeordnet ist. Alternativ oder zusätzlich kann auch vorgesehen sein, dass zumindest ein Deformationselement an einem Boden des Einschubs angeordnet ist.

Bei einer besonderen Ausführungsform des Steckverbindungselements ist vorgesehen, dass dieses mehrere Einschübe für jeweils ein Tragrohr aufweist.

Das erfindungsgemäße Steckverbindungselement kann vorteilhaft als Rohrverbindungsbauteil und/oder als Rohreckverbindungsbauteil ausgebildet sein. Ferner kann eine Rückzugssperre, zum Beispiel in Form von Widerlagern o.ä. vorgesehen sein.

Es ist auch möglich, das Steckverbindungselement als Standfuß auszubilden. Bei einer besonderen Ausführungsform dient das Steckverbindungselement sowohl als Rohrverbindungsbauteil als auch als Standfuß. Diese Ausführungsform ist besonders gut dazu geeignet, einen Standbügel für ein Wäschetrocknungsgestell herzustellen.

Bei einem erfindungsgemäßen Wäschetrocknungsgestell ist vorgesehen, dass das Wäschetrocknungsgestell zumindest einen aus mehreren Rohren bestehenden ausklappbaren Standbügel aufweist, wobei die mehreren Rohre des Standbügels mit zumindest einem erfindungsgemäßen Steckverbindungselement, das als Rohrverbindungsbauteil und/oder als Rohreckverbindungsbauteil ausgebildet ist, verbunden sind.

In vorteilhafter Weise kann bei einem erfindungsgemäßen Wäschetrocknungsgestell vorgesehen sein, dass der Trockenrahmen des Wäschetrocknungsgestells mit Steckverbindungselementen versehen ist, um die Standbeine oder das Standgestell mit dem Trockenrahmen zu verbinden.

Die erfindungsgemäße Verbindung der Rohrenden über die verdrehgesicherten Steckverbindungselemente kann natürlich auch auf andere Tragrahmen angewendet werden. Insbesondere können auf gleiche Weise Tischgestelle, Untergestelle für Bügelbretter oder ähnliche Gestelle aufgebaut werden.

### Kurze Beschreibung der Zeichnungen

Weitere Merkmale der Erfindung ergeben sich aus den Unteransprüchen und der nachfolgende Beschreibung eines bevorzugten Ausführungsbeispiels.

In den Zeichnungen ist die Erfindung schematisch dargestellt und wird anhand der Figuren nachfolgend beschrieben, wobei gleich wirkende Elemente mit denselben Bezugszeichen versehen sind. Dabei zeigt:

Fig. 1a ein erfindungsgemäßes als Rohreckverbindungsbauteil ausgebildetes Steckverbindungselement,

Fig. 1b das Steckverbindungselement in einer Schnittdarstellung,

Fig. 2 das Steckverbindungselement in einer perspektivischen Darstellung vor dem Aufstecken auf Tragrohre,

Fig. 3 das erfindungsgemäße Steckverbindungselement aufgesteckt auf Rohre, und

Fig. 4 eine Detailansicht der nach dem Aufstecken verformten Rohre.

### Bester Weg zur Ausführung der Erfindung

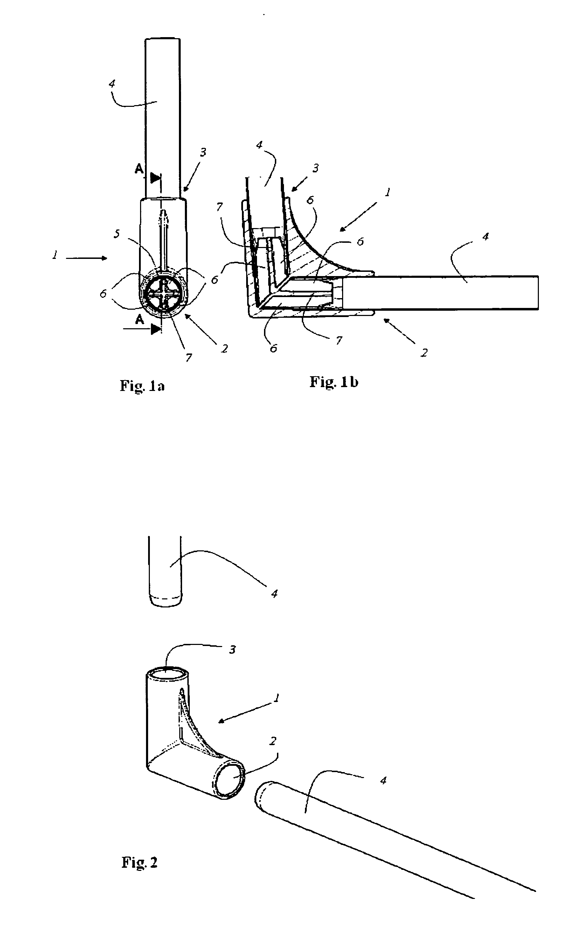

In Figur 1a ist ein erfindungsgemäßes Steckverbindungselement 1 dargestellt, das als Rohreckverbindungsbauteil ausgebildet ist. Das Steckverbindungselement 1 weist zwei Einschube 2, 3 auf, in die Rohre 4 einsteckbar sind. In Figur 1a ist lediglich in einen ersten Einschub 3 ein Rohr 4 eingeschoben, während in den zweiten Einschub 2 noch kein Rohr eingeschoben ist. Der zweite Einschub 2 weist eine Innenwand 5 auf, an der umlaufend vier erste Deformationselemente 6 angeordnet sind. Der zweite Einschub 2 weist darüber hinaus ein zweitens Deformationselement 7 auf, das kreuzförmig ausgebildet ist und am Boden des zweiten Einschubs 2 befestigt ist.

Fig. 1b zeigt das erfindungsgemäße Steckverbindungselement in einer Schnittdarstellung mit zwei eingeschobenen Rohren 4. Es ist zu erkennen, dass der erste Einschub 3 und der zweite Einschub 2 gleichartig aufgebaut und gleichartig mit Deformationselementen 6, 7 ausgerüstet sind.

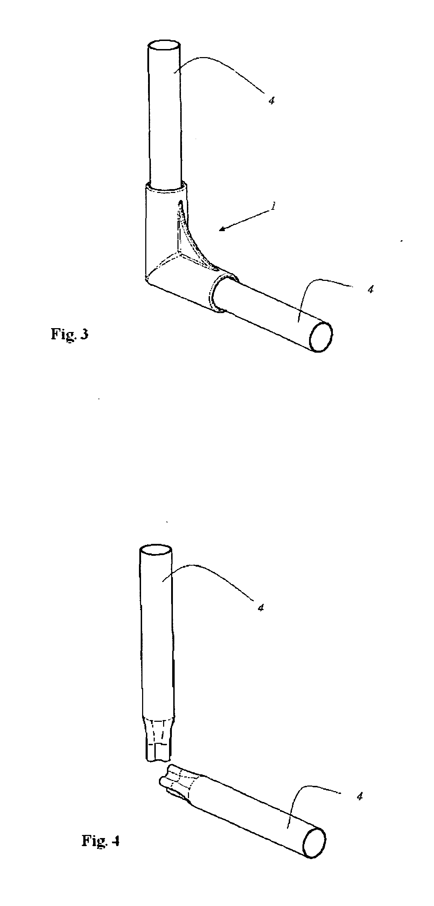

Fig. 2 zeigt das als Rohreckverbindungsbauteil ausgebildete Steckverbindungselement 1 mit seinen Einschüben 2, 3 vor dem Aufstecken auf die Rohre 4. In Fig. 3 ist die Situation nach dem Aufstecken auf Rohre 4 dargestellt. Die Rohre werden durch die besondere Anordnung der Deformationselemente 6, 7 einerseits gegen Verdrehen und zusätzlich gegen Herausziehen gesichert. Dies unter anderem deshalb, weil die Rohre 4 durch das Aufstecken in der in Figur 4 dargestellten Weise bleibend verformt werden.

Die Erfindung wurde in Bezug auf eine besondere Ausführungsform beschrieben. Es ist jedoch selbstverständlich, dass Änderungen und Abwandlungen durchgeführt werden können, ohne dabei den Schutzbereich der nachstehenden Ansprüche zu verlassen.

### Bezugszeichenliste

1. Steckverbindungselement
2. Einschub
3. Einschub
4. Tragrohr
5. Innenwand
6. Deformationselement
7. Deformationselement

## Patentansprüche

1. Wäschetrocknungsgestell mit Aufhängmitteln zum trocknenden Aufhängen von Wäschestücken und einem die Aufhängmittel tragenden Tragegestell, das zumindest zwei, miteinander verbundene Tragrohre (4) aufweist, die über ein Steckverbindungselement (1) miteinander verbunden sind, wobei das Steckverbindungselement (1) zumindest einen Einschub (2,3) für ein Endstück eines der Tragrohre (4) aufweist, in dem das Endstück gehalten ist, **dadurch gekennzeichnet, dass** zur Bildung einer Verdrehsicherung das in den Einschub (2,3) eingeschobene Endstück des Tragrohres (4) unrund deformiert ist, wobei zumindest ein Deformationsmittel (6,7) in dem Einschub (2,3) vorgesehen ist, das das Tragrohr (4) beim Einstecken des Tragrohrs (4) in den Einschub (2,3) zur Erzeugung des deformierten Abschnitts infolge der Einschubbewegung zwangsweise zu verformen vermag.

2. Wäschetrocknungsgestell nach Anspruch 1, **dadurch gekennzeichnet, dass** das Tragegestell zumindest einen aus mehreren Tragrohren (4) bestehenden ausklappbaren Standbügel aufweist, wobei die Tragrohre (4) des Standbügels über zumindest ein, als Rohrverbindungsbauteil und/oder Rohreckverbindungsbauteil ausgebildetes Steckverbindungselement (1) miteinander verbunden sind.

3. Wäschetrocknungsgestell nach einem der beiden vorhergehenden Ansprüche, wobei die Aufhängemittel von einem Trockenrahmen mit Leinen oder Stangen zum Aufhängen von Wäschestücken gebildet sind, **dadurch gekennzeichnet, dass** der Trockenrahmen aus Tragrohren (4) zusammengesetzt ist, wobei die Tragrohre (4) über Steckverbindungselemente (1) miteinander und/oder mit dem Traggestell verbunden sind und die Steckverbindungselemente (1) für jedes zu verbindende Ende der Tragrohre (4) einen Einschub (2,3) für das Endstück der Tragrohre (4) aufweist, in dem das Endstück gehalten ist, wobei zur Bildung einer Verdrehsicherung und/oder einer Rückzugssperre ein Abschnitt des Endstücks unrund deformiert ist und zumindest ein Deformationsmittel (6,7) in dem Einschub (2,3) vorgesehen ist, das das Tragrohr (4) beim Einstecken des Tragrohrs (4) in den Einschub (2,3) zur Erzeugung des deformierten Abschnitts infolge der Einschubbewegung zwangsweise zu verformen vermag.

4. Wäschetrocknungsgestell nach einem der vorhergehenden Ansprüche,
**dadurch gekennzeichnet, dass** das Steckverbindungselement (1) ein Deformationsmittel (6,7) aufweist, dass eine Rippe aufweist und/oder als Rippe ausgebildet ist.

5. Wäschetrocknungsgestell nach einem der vorhergehenden Ansprüche,
**dadurch gekennzeichnet, dass** das Deformationsmittel (6,7) eine Anlaufschräge aufweist.

6. Wäschetrocknungsgestell nach einem der vorhergehenden Ansprüche,
**dadurch gekennzeichnet, dass** das Steckverbindungselement (1) mehrere Deformationselemente (6,7) aufweist.

7. Wäschetrocknungsgestell nach einem der vorhergehenden Ansprüche,
**dadurch gekennzeichnet, dass** das Deformationselement (6,7) kreuzförmig ausgebildet ist und/oder mehrere Deformationselemente (6,7) kreuzförmig zueinander angeordnet sind.

8. Wäschetrocknungsgestell nach einem der vorhergehenden Ansprüche,
**dadurch gekennzeichnet, dass** zumindest ein Deformationselement (6,7) an einer Innenwand des Einschubs (2,3) angeordnet ist.

9. Wäschetrocknungsgestell nach einem der vorhergehenden Ansprüche,
**dadurch gekennzeichnet, dass** der Einschub (2,3) hohlzylindrisch ausgebildet ist und zumindest ein Deformationselement (6,7) an einem Boden des Einschubs (2,3) angeordnet ist.

10. Wäschetrocknungsgestell nach einem der vorhergehenden Ansprüche,
**dadurch gekennzeichnet, dass** zumindest ein Steckverbindungselement (1) als Standfuß ausgebildet ist.

## Claims

1. A laundry drying rack comprising suspension means for hanging up pieces of laundry for drying purposes and a supporting frame, which supports the suspension means and which encompasses at least two supporting tubes (4), which are connected to one another and which are connected to one another via a connector assembly element (1), wherein the connector assembly element (1) encompasses at least one slide-in module (2, 3) for an end piece of one of the supporting tubes (4), in which the end piece is held, **characterized in that** the end piece of the supporting tube (4), which is inserted into the slide-in module (2, 3), is deformed in a non-round manner for forming a lock against rotation, wherein provision is made in the slide-in module (2, 3) for at least one deformation means (6, 7), which is able to deform the supporting tube (4) by force due to the insertion movement in response to the insertion of the supporting tube (4) into the slide-in module (2, 3) to create the deformed section.

2. The laundry drying rack according to claim 1, **characterized in that** the supporting frame encompasses at least one fold-out standing bracket, which consists of a plurality of supporting tubes (4), wherein the supporting tubes (4) of the standing bracket are connected to one another via at least one connector assembly element (1), which is embodied as a tube connection component and/or tube corner connection component.

3. The laundry drying rack according to one of the two preceding claims, wherein the suspension means are formed by a drying rack comprising ropes or bars for hanging up pieces of laundry, **characterized in that** the drying rack is comprised of supporting tubes (4), wherein the supporting tubes (4) are connected to one another via connector assembly elements (1) and/or to the supporting frame and the connector assembly elements (1) encompass, for each of the ends of the supporting tubes (4) that are to be connected, a slide-in module (2, 3) for the end piece of the supporting tubes (4), in which the end piece is held, wherein a section of the end piece is deformed in a non-round manner for forming a lock against rotation and/or a retraction lock, and provision is made in the slide-in module (2, 3) for at least one deformation means (6, 7), which is able to deform the supporting tube (4) by force due to the insertion movement in response to the insertion of the supporting tube (4) into the slide-in module (2, 3) to create the deformed section.

4. The laundry drying rack according to one of the preceding claims, **characterized in that** the connector assembly element (1) encompasses a deformation means (6, 7), which encompasses a web and/or which is embodied as a web.

5. The laundry drying rack according to one of the preceding claims, **characterized in that** the deformation means (6, 7) encompasses a leading chamfer.

6. The laundry drying rack according to one of the preceding claims, **characterized in that** the connector assembly element (1) encompasses a plurality of deformation elements (6, 7).

7. The laundry drying rack according to one of the preceding claims, **characterized in that** the deformation element (6, 7) is embodied in a crosswise manner and/or **in that** a plurality of deformation elements (6, 7) are arranged crosswise to one another.

8. The laundry drying rack according to one of the preceding claims, **characterized in that** at least one deformation element (6, 7) is arranged on an inner wall of the slide-in module (2, 3).

9. The laundry drying rack according to one of the preceding claims, **characterized in that** the slide-in module (2, 3) is embodied in a hollow-cylindrical manner and **in that** at least one deformation element (6, 7) is arranged on a bottom of the slide-in module (2, 3).

10. The laundry drying rack according to one of the preceding claims, **characterized in that** at least one connector assembly element (1) is embodied as a base.

## Revendications

1. Châssis de séchage du linge avec des moyens d'étendage pour l'étendage à des fins de séchage de pièces de linge et un châssis porteur portant les moyens d'étendage, qui comporte au moins deux tubes de support (4) reliés ensemble, qui sont reliés ensemble par l'intermédiaire d'un élément de liaison par enfichage (1), l'élément de liaison par enfichage (1) comportant au moins un insert (2, 3) pour une partie d'extrémité de l'un des tubes de support (4) dans lequel la partie d'extrémité est maintenue, **caractérisé en ce que** pour créer une sécurité contre la torsion, la partie d'extrémité du tube de support (4) insérée dans l'insert (2,3) est déformée de manière ovalisée, au moins un moyen de déformation (6,7) susceptible de déformer le tube de support (4) par force lors de l'introduction du tube de support (4) dans l'insert (2, 3) pour la création du tronçon déformé suite au mouvement d'insertion étant prévu dans l'insert (2, 3).

2. Châssis de séchage du linge selon la revendication 1, **caractérisé en ce que** le châssis porteur comporte au moins un étrier d'immobilisation déployable constitué de plusieurs tubes de support (4), les tubes de support (4) de l'étrier d'immobilisation étant reliés ensemble par l'intermédiaire d'au moins un élément de liaison par enfichage (1) conçu en tant que composant d'assemblage de tube et/ou en tant que composant d'assemblage angulaire de tube.

3. Châssis de séchage du linge selon l'une quelconque des deux revendications précédentes, les moyens d'étendage étant formés par un cadre de séchage avec des fils ou des barres pour étendre des pièces de linge, **caractérisé en ce que** le cadre de séchage est assemblé à partir de tubes de support (4), les tubes de support (4) étant reliés ensemble et/ou avec le châssis porteur par l'intermédiaire d'éléments de liaison par enfichage (1) et les éléments de liaison par enfichage (1) comportant pour chaque extrémité à relier des tubes de support (4) un insert (2, 3) pour la pièce d'extrémité des tubes de support (4) dans lequel la pièce d'extrémité est maintenue, pour créer une sécurité contre la torsion et/ou un blocage contre le rappel, un tronçon de la pièce d'extrémité étant déformé de manière ovalisée et au moins un moyen de déformation (6, 7) susceptible de déformer par force le tube de support (4) lors de l'insertion du tube de support (4) dans l'insert (2, 3) pour créer le tronçon déformé étant prévu dans l'insert (2,3).

4. Châssis de séchage du linge selon l'une quelconque des revendications précédentes, **caractérisé en ce que** l'élément de liaison par enfichage (1) comporte un moyen de déformation (6, 7) qui comporte une nervure et/ou qui est conçu sous la forme d'une nervure.

5. Châssis de séchage du linge selon l'une quelconque des revendications précédentes, **caractérisé en ce que** le moyen de déformation (6, 7) comporte une inclinaison d'amorçage.

6. Châssis de séchage du linge selon l'une quelconque des revendications précédentes, **caractérisé en ce que** l'élément de liaison par enfichage (1) comporte plusieurs éléments de déformation (6, 7).

7. Châssis de séchage de linge selon l'une quelconque des revendications précédentes, **caractérisé en ce que** l'élément de déformation (6, 7) est conçu de manière cruciforme et/ou que plusieurs éléments de déformation (6,7) sont disposés de manière cruciforme les uns par rapport aux autres.

8. Châssis de séchage du linge selon l'une quelconque des revendications précédentes, **caractérisé en ce qu'**au moins un élément de déformation (6, 7) est disposé sur une paroi intérieure de l'insert (2,3).

9. Châssis de séchage du linge selon l'une quelconque des revendications précédentes, **caractérise en ce que** l'insert (2,3) est conçu sous forme de cylindre creux et au moins un élément de déformation (6,7) est disposé sur un fond inférieur de l'insert (2,3).

10. Châssis de séchage du linge selon l'une quelconque des revendications précédentes, **caractérisé en ce qu'**au moins un élément de liaison par enfichage (1) est conçu en tant que pied.
